# EUROPEAN PATENT SPECIFICATION

(11) **EP 0 246 887 B1**
(45) Date of publication and mention of the grant of the patent: **21.07.1993**
(21) Application number: 87304502.5
(22) Date of filing: 20.05.1987
(51) Int. Cl.: G06F 13/14

(54) **Pseudo-status signal generator**
Pseudozustandssignalgenerator
Générateur de signal pseudo-état

(30) Priority: 20.05.1986 JP 113641/86
(43) Date of publication of application: 25.11.1987
(73) Proprietor: MITSUBISHI DENKI KABUSHIKI KAISHA, Tokyo 100 (JP)
(72) Inventor: Makoto, Okura Keisanki Seisakusho, Kamakura City Kanagawa Prefecture (JP)
(74) Representative: Hackett, Sean James

(56) References cited:
- EP-A- 0 067 302
- US-A- 4 271 479
- US-A- 4 315 310
- US-A- 4 413 319
- IBM TECHNICAL DISCLOSURE BULLETIN, vol. 28, no 2, July 1985, pages 838-839, New York, US; "Synchronization of peripheral devices via bus cycle delay"
- PATENT ABSTRACTS OF JAPAN, vol. 8, no. 242 (P-311)[1679], 7th November 1984; & JP-A-59 114 639 (OLYMPUS KOGAKU KOGYO K.K.) 02-07-1984

## Description

### BACKGROUND OF THE INVENTION

This invention relates to a pseudo-status signal generator such as, for example, a pseudo-status signal generator for an electronic circuit like a CRT device in which data input and output are always enabled.

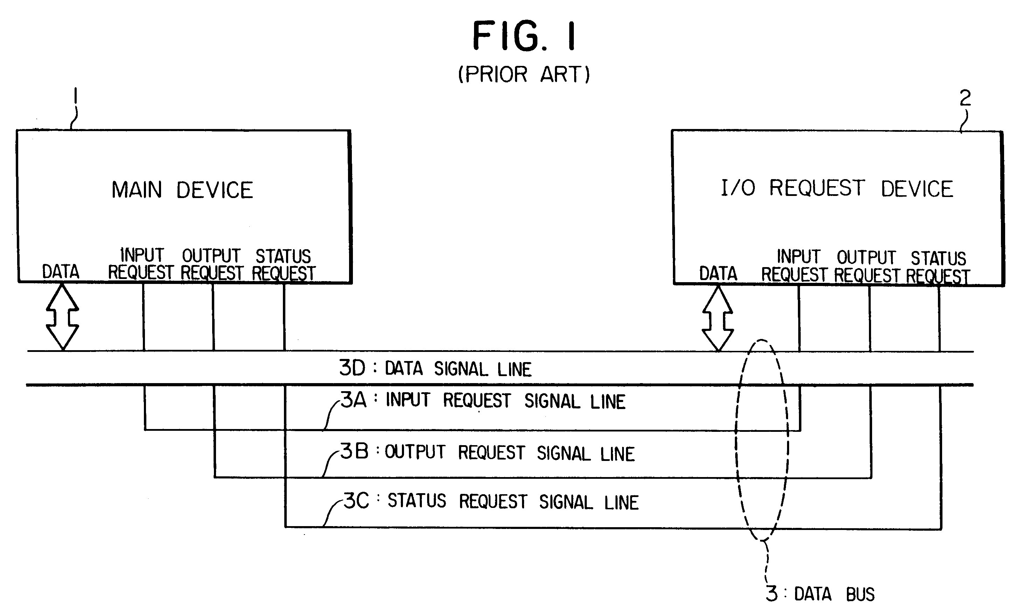

Fig. 1 is a block diagram showing the general arrangement of a prior-art example. In Fig. 1, numeral 1 denotes a main device such as a CRT device, and numeral 2 denotes an input/output requesting device like an input/output controller. The main device 1 and the input/output requesting device 2 are connected to each other through a data bus 3. The data bus 3 includes an input request signal line 3A for transmitting a data input request to the main device 1 by the input/output requesting device 2, an output request signal line 3B for transmitting a data output request, a status request signal line 3C for requesting status information such as "busy" or "ready", and a data signal line 3D for transmitting predetermined data. The main device 1 further contains a status signal generator (not shown) for indicating the actual status to an external device.

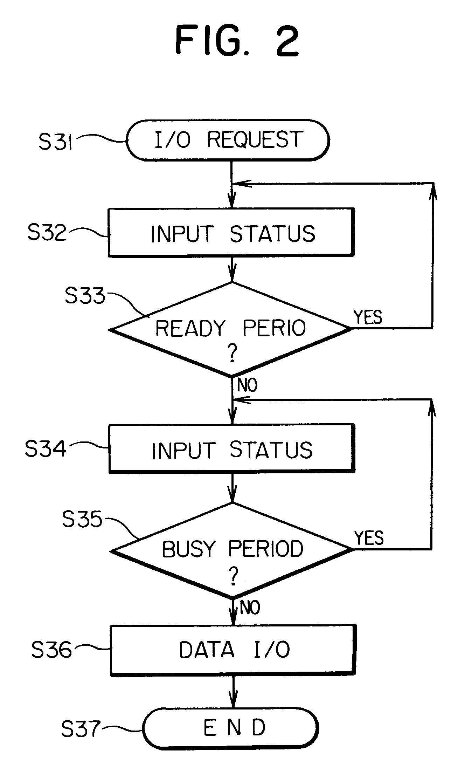

The operation of the prior-art example will be described. The input/output requesting device 2 applies a predetermined request through the input request signal line 3A, the output request signal line 3B and the status request signal line 3C in the data bus 3 to the main device 1, and inputs or outputs the data from or to the main device 1 in response to the application of the request to the main device 1. The input/output requesting device 2 must complete the input or output operation of the predetermined data within a period that the main device 1 is ready, i.e., within a period that the input or output operation is enabled. Thus, the input/output requesting device 2 generates a predetermined status request to thereby read corresponding status information from the main device 1 side and inputs or outputs the predetermined data after confirming that the main device 1 has entered the ready period. However, according to this method, there is a possibility that the main device 1 might enter a busy period, i.e., within a period where the data input or output operation is disabled while inputting or outputting data. From this, the input requesting device 2 needs to input or output the data synchronously with the start of the ready period of the main device 1 according to an algorithm represented in Fig. 2. Fig. 2 shows a flowchart of an algorithm used generally to request the input or output of data.

The abovementioned CRT device is considered here to be a representative example of the main device 1. In this CRT device, the ready period is a blanking period corresponding to a period where data to be displayed can be input and output, and the busy period is a displaying period corresponding, for example, to a period where the input data is displayed on the CRT device. The length of the busy period is generally set larger than that of the ready period, and when the data is input or output by fully utilizing the ready period, the data to be displayed within the busy period is reliably supplied to the CRT device. However, if the data input or output is, for example, started from the vicinity of the end of the ready period, the period will have shifted to the busy period before the input or output operation has finished, and a certain noise is thus displayed on the screen of the CRT device.

The flowchart in Fig. 2 shows an example of an algorithm devised to eliminate the abovementioned drawback. If an I/O request is output in step S31, a status signal of the main device 1 is input in step S32, and it is determined whether the main device 1 has entered a ready period or not in step S33. If NO is determined in step S33, the operation is shifted to following step S34. If YES is determined in step S33, the operation is returned to step S32. The status signal of the main device 1 is input in step S34, and whether the main device 1 has entered a busy period or not is determined in step S35. If YES is determined in step S35, the operation is returned to step S34, but if NO is determined in step S35, the operation is shifted to step S36. After the predetermined data is input or output, the operation is ended in step S37.

The data input to or output from the main device 1 is started from the vicinity of the starting point of the ready period according to the algorithm represented in Fig. 2. In other words, the data input/output is started substantially synchronously with the starting point of the ready period of the main device 1.

The main device in the abovementioned prior-art example is constructed so that ready periods and busy periods are taken at a certain repetitive ratio, and there is a drawback that, when the data input/output is not completed within the ready period, a noise is generated in the busy period. Even if a main device is prepared in which data input/output is always enabled, its function cannot be utilized unless the algorithm in Fig. 2 is modified. Therefore, another drawback arises in which data input/output speed cannot be improved.

### SUMMARY OF THE INVENTION

This invention has been made in order to eliminate such drawbacks, and has for its object to provide a pseudo-status signal generator which can improve data input/output speed without adding particular modifications to the input/output requesting device.

### BRIEF DESCRIPTION OF THE DRAWINGS

Fig. 1 is a block diagram showing a general arrangement of a prior art example;
Fig. 2 is a flowchart of an algorithm used generally for data input/output request; and
Fig. 3 is a block diagram showing a general arrangement of an embodiment of a pseudo-status signal generator according to this invention.

### DESCRIPTION OF THE PREFERRED EMBODIMENT

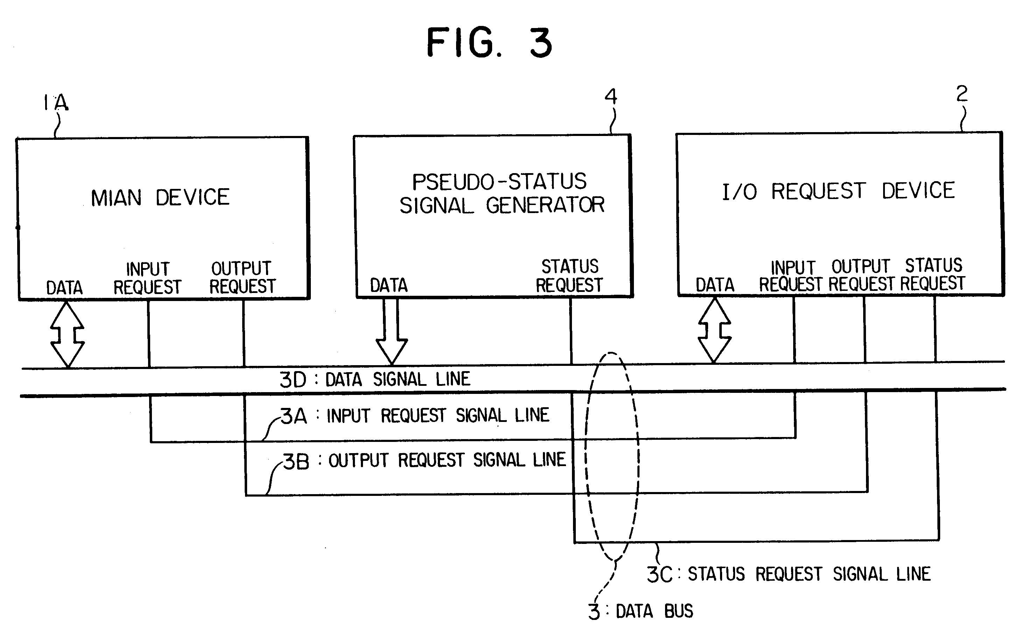

Fig. 3 is a block diagram of a general arrangement of an embodiment of a pseudo-status signal generator according to this invention. In Fig. 3, symbol 1A denotes a main device in which input/output is always enabled, numeral 2 denotes an input/output requesting device, and numeral 4 denotes a pseudo-status signal generator for pseuod-generating status information of the main device 1A. The main device 1A, the input/output requesting device 2 and the pseudo-status signal generator 4 are connected to each other through a data bus 3. An input request signal line 3A and an output request signal line 3B of the data bus 3 connect the main device 1A and the input/output requesting device 2 to each other, and a status request signal line 3C connects the pseudo-status signal generator 4 and the input/output requesting device 2 to each other. A data signal line 3D is connected among the main device 1A, the pseudo-status signal generator 4 and the input/output requesting device 4 each other. In this embodiment, the pseudo-status signal generator 4 alternatively generates status information of ready and status information of busy when status information is requested from the input/output requesting device 2. In other words, if the status information of ready is output at a certain time, the status information of busy is output to the request of the subsequent status information.

Here, the operation of the embodiment described above will be described. When the input/output requesting device 2 operates to input or output data to or from the main device 1A, the input/output requesting device 2 requests the status information to the pseudo-status signal generator 4 through the status request signal line 3C, and receives the status information as the response through the data signal line 3D. If the status of busy is output in case of the immediately previous status request, the status information of ready is output in the subsequent status request. Therefore, the operation does not enter into the loop in the flowchart of Fig. 2, and the data input or output operation is accelerated by that amount.

In the embodiment described above, the pseudo-status signal generator 4 is provided as an independent piece of hardware. However, this invention is not limited to this particular embodiment. For example, the pseudo-status signal generator may be associated in the main device 1A or the input/output requesting device 2 if functional independence is maintained, thereby performing similar advantages as those of the abovementioned embodiment.

As described above, the pseudo-status signal generated according to this invention is interposed between the main device in which the ready state is always set and the input/output requesting device for producing the predetermined input/output request to the main device and alternatively repeats the status signal representing the ready state and the status signal representing the busy state to the input/output requesting device whenever the status request signal is output from the input/output requesting device. Therefore, the data input/output operation can be accelerated without the need for any particular modification in the input/output requesting device.

## Claims

1. A pseudo-status signal generator (4) interposed between a main device (1A) in which a ready state is always maintained and an input/output requesting device (2) adapted to produce predetermined input/output request signals (3A,3B) to said main device characterized in that said pseudo-status signal generator alternatively repetitively produces on a data signal line (3D) a status signal representing a ready state and a status signal representing a busy state to said input/output requesting device whenever a status request signal (3C) is output from said input/output requesting device.

## Patentansprüche

1. Pseudozustandssignalgenerator (4), der zwischen eine Haupteinrichtung (1A), in der ständig ein Bereitzustand aufrechterhalten wird, und einer Eingabe-Ausgabe-Anforderungseinrichtung (2) zwischengeschaltet ist, die ausgebildet ist, um vorbestimmte Eingabe-Ausgabe-Anforderungssignale (3A, 3B) zu der Haupteinrichtung zu erzeugen, dadurch gekennzeichnet, daß der Pseudozustandssignalgenerator alternativ wiederholt auf einer Datensignalleitung (3D) ein Zustandssignal, das einen Bereitzustand repräsentiert, und ein Zustandssignal, das einen Besetztzustand repräsentiert, zu der Eingabe-Ausgabe-Anforderungseinrichtung immer dann erzeugt, wenn ein Zustands-Anforderungssignal (3C) von der Eingabe-Ausgabe-Anforderungseinrichtung abgegeben wird.

## Revendications

1. Générateur de signal pseudo-état (4) intercalé entre un dispositif principal (1A) dans lequel un état de disponibilité est toujours maintenu, et un dispositif (2) demandant l'entrée/sortie, ce dernier dispositif étant conçu pour produire des signaux (3A, 3B) de demande d'entrée/sortie en direction dudit dispositif principal, caractérisé en ce que ledit générateur de signal pseudoétat produit de manière répétitive en alternance sur une ligne de signaux de données (3D) un signal d'état représentant un état disponible et un signal d'état représentant un état occupé, en direction dudit dispositif demandant une entrée/sortie à chaque fois qu'un signal de demande d'état (3C) est délivré par ledit dispositif demandant une entrée/sortie.
